# EUROPEAN PATENT SPECIFICATION

(11) **EP 1 672 996 B1**
(45) Date of publication and mention of the grant of the patent: **23.04.2008**
(21) Application number: 03772632.0
(22) Date of filing: 06.10.2003
(51) Int. Cl.: A47J 31/44

(54) **STERILISABLE DEVICE FOR PRODUCING A HEATED EMULSION OF MILK AND AIR**
STERILISIERBARE VORRICHTUNG ZUM ERZEUGEN EINER HEISSEMULSION VON MILCH UND LUFT
DISPOSITIF DE PRODUCTION D'UNE EMULSION DE LAIT ET D'AIR CHAUFFEE STERILISABLE

(43) Date of publication of application: 28.06.2006
(73) Proprietor: Di Giampaolo, Fabrizia, 25050 Rodengo Saiano (IT); Marchesi, Gianbattista, 24060 Credaro (IT)
(72) Inventor: Di Giampaolo, Fabrizia, 25050 Rodengo Saiano (IT); Marchesi, Gianbattista, 24060 Credaro (IT)
(74) Representative: Crippa, Paolo Ernesto
(86) International application number: PCT/IT2003/000598
(87) International publication number: WO 2005/032316

(56) References cited:
- EP-A- 0 801 922
- US-A- 4 779 519
- US-A- 5 738 002
- US-B1- 6 499 389

## Description

The present invention relates to a device intended to produce a heated emulsion of a liquid, in particular milk, with air. In the specific case of milk, the resulting emulsion is used to produce the drink called "cappuccino". The device is intended to be applied to coffee machines, both of the professional and of the household type.

Various embodiments of devices of this type are already known. In general, they comprise a body wherein there are obtained inlets for the fluids, for air and for a steam jet intended to heat the emulsion, a mixing chamber and an outlet.

One of the most widely felt problems connected to the use of these devices is the need of sterilising them to prevent the forming of dirt and bacteria. Given their small size and the inaccessibility to the user, in fact, the inlets can be a fertile ground for moulds and bacteria or, in any case, for deposits of dirt to be removed.

A proposal has already been made to use the same steam jet to clean and sterilise the device body at high temperature. The outlet must therefore be closed so that the steam circulates in the device and exits from the fluid and air inlets, thereby sterilising them. However, in all known devices, besides being often relatively difficult and complicated, this sterilisation function has implied a higher complexity of the appliance structure.

For example, a device provided with a plug or cover to be tightened on the outlet has been proposed. In another embodiment, such as that described in patent EP 0 801 922, the mixing chamber or duct is obtained into an inside body, longitudinally sliding into an outside body between a raised open position of the delivery hole, and a lowered closed position of said hole.

Based on these premises, the main object of the present invention is that of proposing a device for producing a heated emulsion of a drink, in particular milk, and water, provided with means for sterilising it by a steam jet and having a simpler and more reliable structure than that of the devices mentioned with reference to the prior art.

Such object is achieved by a device characterised in that it houses, into a mixing chamber or duct ending with a delivery hole, valve means capable of rotating between an open position, adapted for allowing the emulsion to reach the delivery hole, and a closed position to allow a steam circulation towards the drink and air inlets.

According to a preferred embodiment of the invention, such valve means comprise two ceramic plates of the type commonly used in the cartridges of mixing taps, said plates being constrained to respective portions of the body, capable of rotating relative to one another.

Further features and advantages of the device according to the present invention will appear more clearly from the following description of a preferred embodiment, made by way of a non-limiting example with reference to the attached drawings, wherein:

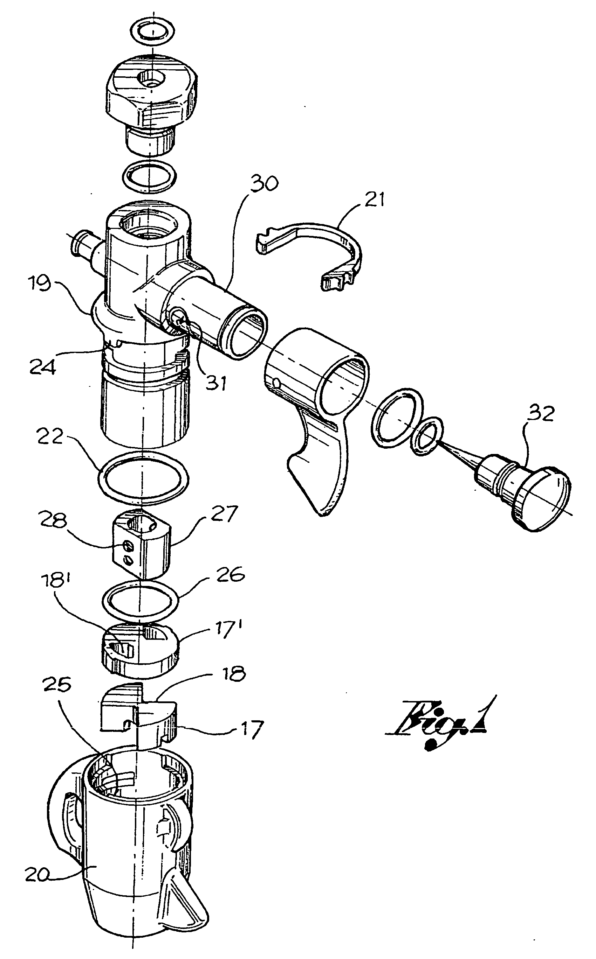

Figure 1 shows an exploded perspective view of the device according to the invention;

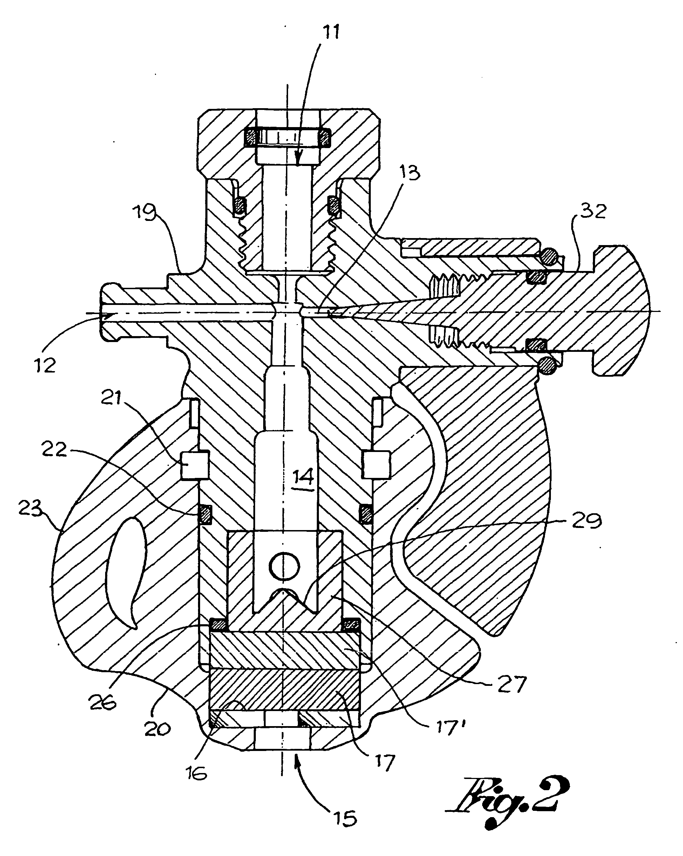

Figure 2 shows a longitudinal section of the assembled device;

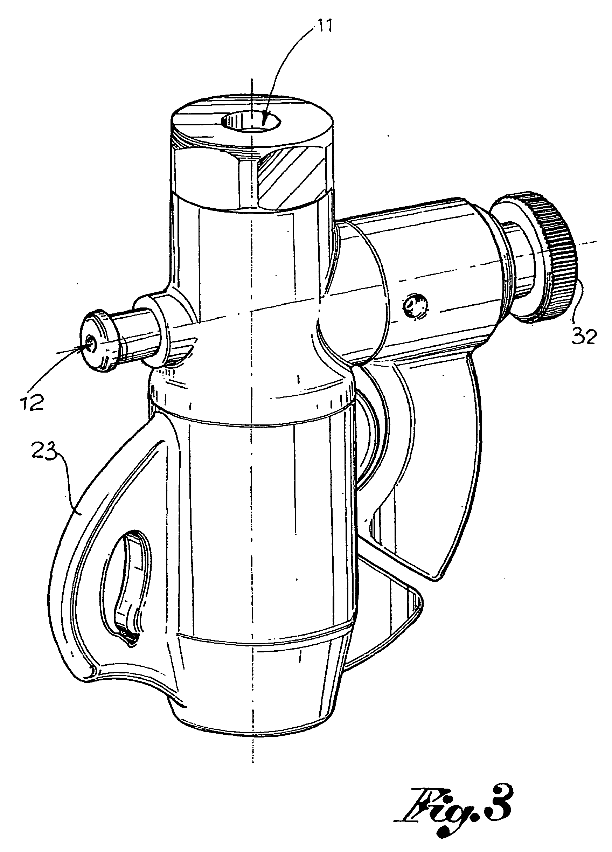

Figure 3 shows a perspective view of the device set up for normal operation;
Figure 4 shows the device in position to be cleaned; and
Figure 5 shows the device in position for delivering a heated drink without foam.

With the purpose of simplifying the description of the present invention, in the following description reference shall be made in a non-limiting way to the particular example of a device adapted for producing the so-called "cappuccino" mixing milk, air and steam.

The device comprises a body 10 wherein there are obtained an inlet 11 for a steam flow, an inlet 12 for milk, and an inlet 13 for air. The three inlets outflow into a mixing chamber 14, for example aligned and continuing from the steam inlet, which extends towards a hole 15 for delivering the milk-air emulsion with an increasing section profile. Such profile has the function of producing a Venturi effect so that the steam jet flow causes an intake of milk and air into the mixing chamber through the respective inlets.

According to the finding, a seat 16 is provided between the mixing chamber 14 and the delivery chamber 15 wherein there are housed valve means capable of rotating between an open position, adapted for placing the mixing chamber 14 in fluid communication with the delivery hole 15, and a closed position of said mixing chamber.

According to a preferred embodiment of the invention, said valve means comprise two superimposed ceramic plates 17, 17', of the type commonly used in mixing taps, one rotating relative to the other. Such plates exhibit respective fissures or openings 18, 18' obtained so as to be aligned and therefore define passage gaps for the fluid, when the plates are in open position, or not aligned, with consequent closing of said passage gaps when the plates are rotated in closed position.

Inlets 11-13 and the mixing chamber 14 are obtained in a top portion 19 of body 10, having a substantially cylindrical shape, coupled with a bottom portion 20 wherein there is obtained the hole 15 for delivering the emulsion. In the illustrated example, the bottom portion 20 of the body is shaped as a bowl intended to receive a bottom portion of the top portion 19 of body 10. In any case, the two portions 19 and 20 are turnably coupled with respect to one another and are axially constrained, for example by a seeger 21, with the interposition of a sealing element 22.

The bottom ceramic plate 17 is housed and locked in the bottom portion 20 of body 10, whereas the top ceramic plate 17' is constrained at least angularly to the top portion 19 of body 10. In this way, a simple rotation of a part of the body relative to the other causes a corresponding rotation of a plate relative to the adjacent one, and thereby the passage from the open position to the closed position of the mixing chamber 14 towards the delivery hole 15, or vice versa.

Advantageously, the bottom portion 20 of body 10 is provided with a gripping handle 23 to be rotated relative to the top portion 19 which, on the other hand, is fixed since it is constrained to the steam and milk feeding pipes - not shown.

Using ceramic plates 17, 17' such as those illustrated in the drawings, the opening and closing of the passage gaps can be obtained by a hexagesimal 90° rotation with respect to one another, that is, of the bottom portion of the body with respect to the top one. To this purpose, the top portion 19 of the body is provided with at least one radial tooth 24 that can move between two shoulders 25 obtained in the bottom portion 20 and spaced from one another by an arc of a circumference of hexagesimal 90°.

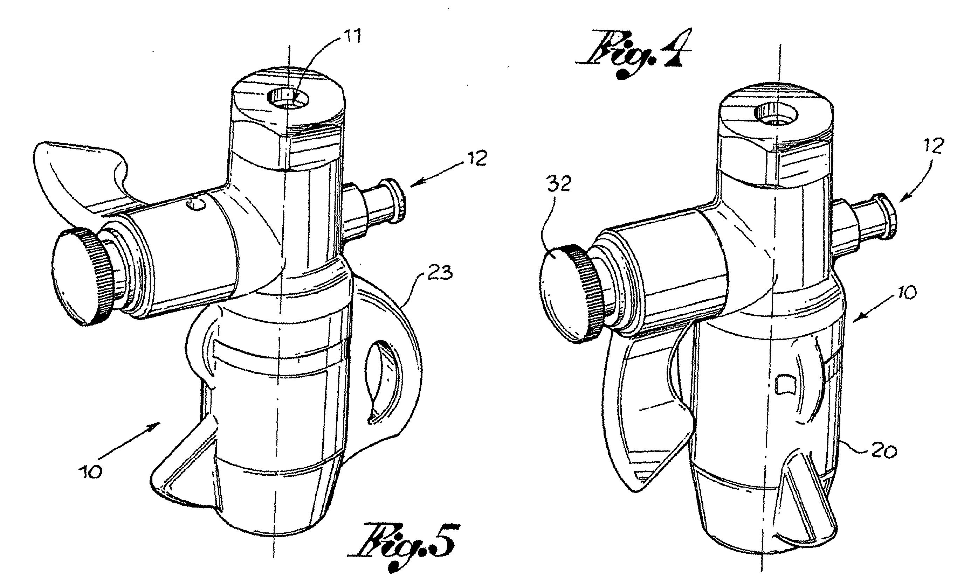

So, with a simple rotation of the bottom portion 20 of body 10 (figure 4), it is possible to close the delivery hole 15 and it is therefore possible to let a steam jet into the device so that, since it cannot exit from said hole 15, it is forced to flow through the air 13 and milk 12 inlets, thereby sterilising them.

Moreover, in the section with the largest diameter in the mixing chamber 14, on the top plate 17' and with the interposition of a sealing element 26, there is housed an insert 27 intended to suitably decrease the speed of the fluid flowing into the mixing chamber to reduce the forming of bubbles. To this purpose, insert 27 exhibits radial holes 28 and a conical shaped closed bottom 29.

The air inlet 13 is obtained in a cylindrical projection 30 overhanging the top portion 19 of body 10 and it communicates with the outside through a feeding hole 31 obtained radially with respect to the main axis of said cylindrical projection 30. Inlet 13 is associated with a pin valve 32 adapted for regulating - through a higher or lower screwing into the cylindrical projection - the quantity of air to be sucked into the device.

## Claims

1. Device for producing a heated emulsion of a drink, in particular milk, and air with the aid of a steam jet, comprising a body (10) wherein there are obtained at least one steam inlet (11), a drink inlet (12), an air inlet (13) and a mixing chamber (14) for the drink, air and steam, where said mixing chamber communicates with said inlets and with a hole (15) for delivering the emulsion, **characterised in that** between the mixing chamber and the delivery hole there are provided valve means capable of rotating between an open position adapted for placing the mixing chamber (14) in fluid communication with the delivery hole (15) and a closed position of said mixing chamber, in which the steam jet is forced to exit from the body passing through the air and drink inlets, to sterilise the device.

2. Device according to claim 1, wherein said valve means comprise a pair of superimposed ceramic plates (17, 17') capable of axially rotating with respect to one another between the open position and the closed position.

3. Device according to claim 2, wherein said plates exhibit respective fissures or openings (18, 18') obtained so as to be aligned, when the plates are in open position, and not aligned when the plates are in closed position.

4. Device according to any one of the previous claims, wherein the body comprises a top portion (19) and a bottom portion (20) axially constrained with possibility of angular movements with respect to one another.

5. Device according to claim 4, wherein the rotation of a portion of the body relative to the other is limited to an angle of hexagesimal 90°.

6. Device according to claims 2 and 4 or 5, wherein at least one plate is constrained at least angularly to a respective portion of the body.

7. Device according to any one of claims from 2 to 6, wherein the plates are capable of rotating by hexagesimal 90° with respect to one another.

8. Device according to claim 4 or 5, wherein one of the two portions exhibits a radial tooth (24) movable between two support shoulders (25) obtained in the other portion.

9. Device according to any one of the previous claims, wherein the air inlet is obtained in a cylindrical projection (30) of the body and is open outwards through a hole (31) obtained radially with respect to the main axis of said cylindrical projection.

10. Device according to claim 9, wherein around said cylindrical projection there is mounted an annular element (33) bearing a radial hole (34), said annular element being capable of rotating on the cylindrical projection between an open position of the air inlet, wherein the radial holes of the cylindrical projection and of the annular element are aligned, and a closed position of said inlet wherein said holes are not aligned.

11. Device according to any one of the previous claims, wherein the air inlet is provided with a valve for regulating the air quantity to be let into the device.

12. Device according to claim 11, wherein said valve is a pin valve (32).

13. Device according to any one of the previous claims, wherein the mixing chamber (14) exhibits a plurality of sections with an increasing diameter towards the emulsion delivery hole.

14. Device according to claim 13, wherein the valve means are housed in the section with the largest diameter.

15. Device according to claim 2, wherein an insert (27) is placed to decrease the speed of the emulsion flow.

16. Device according to claim 15, wherein said insert is provided with radial gaps (28).

17. Device according to claim 15 or 16, wherein said insert is closed at the bottom by a conical shaped bottom (29).

## Patentansprüche

1. Vorrichtung zum Herstellen einer erhitzten Emulsion eines Getränks, insbesondere Milch, und Luft mit Hilfe eines Dampfstrahls, umfassend einen Körper (10), in dem wenigstens ein Dampfeinlass (11), ein Getränkeeinlass (12), ein Lufteinlass (13) und eine Mischkammer (14) für das Getränk, Luft und Dampf enthalten sind, wobei die Mischkammer mit den Einlässen und mit einem Loch (15) zum Liefern der Emulsion kommuniziert, **dadurch gekennzeichnet, dass** zwischen der Mischkammer und dem Lieferloch Ventilmittel vorgesehen sind, die in der Lage sind, zwischen einer geöffneten Position, die angepasst ist, um die Mischkammer (14) mit dem Lieferloch (15) in Fluidverbindung zu versetzten, und einer geschlossenen Position der Mischkammer zu rotieren, in welcher der Dampfstrahl gezwungen wird, den Körper durch den Luft- und Getränkeeinlass tretend zu verlassen, um die Vorrichtung zu sterilisieren.

2. Vorrichtung nach Anspruch 1, wobei die Ventilmittel ein Paar überlagerter Keramikplatten (17, 17') umfassen, die in der Lage sind, axial bezüglich einander zwischen der geöffneten Position und der geschlossenen Position zu rotieren.

3. Vorrichtung nach Anspruch 2, wobei die Platten jeweilige Fissuren bzw. Spalten oder Öffnungen (18, 18') aufweisen, die enthalten sind, um ausgerichtet zu sein, wenn die Platten in der geöffneten Position sind, und nicht ausgerichtet zu sein, wenn die Platten in der geschlossenen Position sind.

4. Vorrichtung nach einem der vorhergehenden Ansprüche, wobei der Körper einen oberen Abschnitt (19) und einen unteren Abschnitt (20) umfasst, die axial eingeschränkt sind, aber die Möglichkeit zu Winkelbewegungen zueinander haben.

5. Vorrichtung nach Anspruch 4, wobei die Drehung eines Abschnitts des Körpers relativ zu dem anderen auf einen Winkel von hexagesimal 90° begrenzt ist.

6. Vorrichtung nach Anspruch 2 und 4 oder 5, wobei wenigstens eine Platte wenigstens winkelig zu einem jeweiligen Abschnitt des Körpers beschränkt ist.

7. Vorrichtung nach einem der Ansprüche 2 bis 6, wobei die Platten in der Lage sind, um hexagesimal 90° bezüglich einander zu rotieren.

8. Vorrichtung nach Anspruch 4 oder 5, wobei einer der zwei Abschnitte einen radialen Zahn (24) aufweist, der zwischen zwei Trägerschultern (25) beweglich ist, die in dem anderen Abschnitt enthalten sind.

9. Vorrichtung nach einem der vorhergehenden Ansprüche, wobei der Lufteinlass in einem zylindrischen Vorsprung (30) des Körpers enthalten ist und nach außen durch ein Loch (31) offen ist, das radial bezüglich der Hauptachse des zylindrischen Vorsprungs enthalten ist.

10. Vorrichtung nach Anspruch 9, wobei um den zylindrischen Vorsprung herum ein ringförmiges Element (33) montiert ist, das ein radiales Loch (34) aufweist, wobei das ringförmige Element in der Lage ist, auf bzw. an dem zylindrischen Vorsprung zwischen einer geöffneten Position des Lufteinlasses, in der die radialen Löcher des zylindrischen Vorsprungs und des ringförmigen Elements ausgerichtet sind, und einer geschlossenen Position des Einlasses zu rotieren, in der die Löcher nicht ausgerichtet sind.

11. Vorrichtung nach einem der vorhergehenden Ansprüche, wobei der Lufteinlass mit einem Ventil zum Regulieren der Luftmenge versehen ist, die in die Vorrichtung eingelassen werden soll.

12. Vorrichtung nach Anspruch 11, wobei das Ventil ein Stiftventil (32) ist.

13. Vorrichtung nach einem der vorhergehenden Ansprüche, wobei die Mischkammer (14) eine Mehrzahl von Abschnitten mit einem sich zu dem Emulsionslieferloch hin vergrößernden Durchmesser aufweist.

14. Vorrichtung nach Anspruch 13, wobei die Ventilmittel in dem Abschnitt mit dem größten Durchmesser untergebracht sind.

15. Vorrichtung nach Anspruch 2, wobei ein Einsatz (27) plaziert ist, um die Geschwindigkeit des Emulsionsflusses zu verringern.

16. Vorrichtung nach Anspruch 15, wobei der Einsatz mit radialen Zwischenräumen bzw. Spalten (28) versehen ist.

17. Vorrichtung nach Anspruch 15 oder 16, wobei der Einsatz am Boden durch einen konisch geformten Boden (29) geschlossen ist.

## Revendications

1. Dispositif de production d'une émulsion chauffée d'une boisson, en particulier du lait, et d'air à l'aide d'un jet de vapeur, comprenant un corps (10) dans lequel on obtient au moins un conduit (11) d'admission de vapeur, un conduit (12) d'admission de boisson, un conduit (13) d'admission d'air et une chambre (14) de mélange pour la boisson, l'air et la vapeur, où ladite chambre de mélange communique avec lesdits conduits d'admission et avec un orifice (15) pour distribuer l'émulsion, **caractérisé en ce que** entre la chambre de mélange et l'orifice de distribution, sont ménagées des moyens valvulaires clapets capables de pivoter entre une position ouverte adaptée pour placer la chambre (14) de mélange en communication fluidique avec l'orifice (15) de distribution et une position fermée de ladite chambre de mélange, dans laquelle le jet de vapeur est contraint à sortir du corps en passant à travers les conduits d'admission d'air et de boisson, pour stériliser le dispositif.

2. Dispositif selon la revendication 1, dans lequel lesdits moyens valvulaires comprennent une paire de plaques céramiques superposées (17, 17') capables de pivoter axialement l'une par rapport à l'autre entre la position ouverte et la position fermée.

3. Dispositif selon la revendication 2, dans lequel lesdites plaques présentent des fissures ou des ouvertures respectives (18, 18') obtenues de manière à être alignées, lorsque les plaques sont en position ouverte, et non alignées lorsque les plaques sont en position fermée.

4. Dispositif selon l'une quelconque des revendications précédentes, dans lequel le corps comprend une partie supérieure (19) et une partie inférieure (20) maintenues axialement permettant des mouvements angulaires l'une par rapport à l'autre.

5. Dispositif selon la revendication 4, dans lequel la rotation d'une partie du corps relativement à l'autre est limitée à un angle de 90 degrés sexagésimaux.

6. Dispositif selon les revendications 2 et 4 ou 5, dans lequel au moins une plaque est maintenue au moins à un angle sur une partie respective du corps.

7. Dispositif selon l'une quelconque des revendications 2 à 6, dans lequel les plaques sont capables de pivoter de 90 degrés sexagésimaux l'une par rapport à l'autre.

8. Dispositif selon la revendication 4 ou la revendication 5, dans lequel l'une des deux parties présente une dent radiale (24) pouvant se déplacer entre deux épaulements (25) obtenus dans l'autre partie.

9. Dispositif selon l'une quelconque des revendications précédentes, dans lequel le conduit d'admission d'air est obtenu dans une partie saillante cylindrique (30) du corps et s'ouvre vers l'extérieur à travers un orifice (31) obtenu radialement par rapport à l'axe principal de ladite partie saillante cylindrique.

10. Dispositif selon la revendication 9, dans lequel autour de ladite partie saillante cylindrique est monté un élément annulaire (33) supportant un orifice radial (34), ledit élément annulaire étant capable de pivoter sur la partie saillante cylindrique entre une position ouverte du conduit d'admission d'air, dans laquelle les orifices radiaux de la partie saillante cylindrique et de l'élément annulaire sont alignés, et une position fermée dudit conduit dans laquelle lesdits orifices ne sont pas alignés.

11. Dispositif selon l'une quelconque des revendications précédentes, dans lequel le conduit d'admission d'air est muni d'un clapet destiné à réguler la quantité d'air à faire entrer dans le dispositif.

12. Dispositif selon la revendication 11, dans lequel ledit clapet est une soupape à goupille (32).

13. Dispositif selon l'une quelconque des revendications précédentes, dans lequel la chambre (14) de mélange présente une pluralité de sections ayant un diamètre qui augmente vers l'orifice de distribution d'émulsion.

14. Dispositif selon la revendication 13, dans lequel les moyens valvulaires sont logés dans la section ayant le diamètre le plus grand.

15. Dispositif selon la revendication 2, dans lequel un insert (27) est placé pour diminuer la vitesse de l'écoulement de l'émulsion.

16. Dispositif selon la revendication 15, dans lequel ledit insert est pourvu de jeux radiaux (28).

17. Dispositif selon la revendication 15 ou la revendication 16, dans lequel ledit insert est fermé au fond par un fond (29) de forme conique.
